# FASCICULE DE BREVET EUROPEEN

(11) **EP 0 871 136 B1**
(45) Date de publication et mention de la délivrance du brevet: **04.10.2000**
(21) Numéro de dépôt: 98400861.5
(22) Date de dépôt: 08.04.1998
(51) Int. Cl.: G06F 17/60, B07C 3/18

(54) **Procédé de transmission d'informations utilisant un codage matriciel de données**
Verfahren zum Übertragen von Informationen mit Matrixkodierung von Daten
Method for transmitting information using a matrix coding of data

(30) Priorité: 11.04.1997 FR 9704651
(43) Date de publication de la demande: 14.10.1998
(73) Titulaire: Optima Direct, 91700 Villiers sur Orge (FR)
(72) Inventeur: Claviez-Homberg, Patrice, 92270 Bois Colombes (FR); Ricordel, Marc-Olivier, 78570 Andresy (FR)
(74) Mandataire: de Saint-Palais, Arnaud Marie

(56) Documents cités:
- EP-A- 0 282 357
- EP-A- 0 703 540
- US-A- 4 752 675
- US-A- 4 937 439
- US-A- 5 324 927

## Description

La présente invention concerne un procédé de transmission de documents entre un émetteur et une multiplicité de destinataires.

Elle s'applique notamment, mais non exclusivement, à l'automatisation de l'émission d'un ou plusieurs documents vers une multiplicité de destinataires, et du traitement des réponses retournées par les destinataires.
Ces opérations sont effectuées par exemple pour réaliser des enquêtes ou des sondages, notamment pour établir le profil d'une clientèle.

A l'heure actuelle, ces opérations sont effectuées par courrier. Cependant, d'autres moyens de transmission, comme la télécopie ou les systèmes de messagerie électronique, commencent à être utilisés.

Il s'avère que le traitement de documents imprimés transmis par courrier ou télécopie peut difficilement être automatisé à l'aide de moyens mécaniques et informatiques. En effet, pour être automatisé, ce traitement implique une saisie automatique des informations figurant sur les documents imprimés.

Il existe des systèmes de reconnaissance de caractères imprimés. Toutefois, ces systèmes ne garantissent pas une reconnaissance à 100% des caractères lus, et requièrent une intervention manuelle lorsqu'un caractère non reconnu est détecté. Ils ne peuvent donc pas être utilisés pour traiter de manière automatique des volumes importants de courrier.

Le document US 4 937 439 décrit un système d'édition et de traitement automatisé de formulaires personnalisés, capable de saisir automatiquement des formulaires remplis manuellement, ces formulaires étant personnalisés à l'aide d'informations contenues dans une base de données comprenant pour chaque destinataire d'un formulaire, notamment un code d'identification de l'enregistrement. Ce document prévoit de convertir le code d'identification de l'enregistrement en un code de contrôle, analogue à un code à barres, qui est imprimé sur le formulaire, et qui peut être lu de manière automatique par un scanner. Lors du traitement d'un formulaire renvoyé par un destinataire, il est nécessaire d'accéder à la base de données pour obtenir les informations d'identification du destinataire correspondant au code d'identification d'enregistrement obtenu à la suite de la lecture du code à barres par le scanner et du décodage de ce code.

Le document US-A-5 591 956 décrit un type de code matriciel ainsi que ses avantages par rapport aux codes à barres. Les codes matriciels permettent de stocker une grande quantité d'information sur une petite surface, et sont très surs.

La présente invention a pour but de supprimer ces inconvénients. A cet effet, elle propose un procédé pour le traitement automatique de documents émis par un calculateur vers une pluralité de destinataires, chacun de ces documents comportant au moins une partie que chaque destinataire peut émettre en direction d'un système de traitement, le calculateur étant couplé à des moyens de transmission et à une base de données regroupant des données d'identification et d'adressage des destinataires.

Selon l'invention, ce procédé est caractérisé en ce qu'il comprend les étapes suivantes :
- pour chaque destinataire, la constitution par le calculateur, à l'aide des informations contenues dans la base de données, d'une séquence d'informations d'identification comprenant des données d'identification et d'adressage du destinataire, cette séquence d'informations étant compréhensible en elle-même, sans faire appel à une base de données,
- le codage par le calculateur de chaque séquence d'informations respectivement sous la forme d'une matrice de points dont les caractéristiques représentent les informations de la séquence d'informations d'identification,
- la mise en forme et la personnalisation par le calculateur de chaque document à chaque destinataire, comprenant l'insertion de la matrice contenant la séquence d'informations d'identification du destinataire dans la partie du document que le destinataire peut émettre,
- l'émission par le calculateur des documents personnalisés vers les destinataires correspondants,
- la réception par un système de traitement des parties de document émises par les destinataires,
- la lecture et le décodage par le système de traitement de chaque matrice figurant sur les parties de document reçues afin de restituer sous sa forme d'origine la séquence d'informations correspondante, et le traitement de chaque partie de document reçue en association avec les données d'identification contenues dans la séquence d'informations figurant sous forme de matrice sur la partie de document.

Le fait d'utiliser un codage matriciel d'informations d'identification permet d'une part de coder un nombre relativement important d'informations sur une surface réduite. Ainsi, cette technique de codage permet par exemple de coder une cinquantaine de codes ASCII sur une surface de 3 x 3 mm. D'autre part, les informations à coder peuvent être préalablement dupliquées et associées à des sommes de contrôle, par exemple de type CRC (Cyclic Redundancy Check), ce qui permet au moment du décodage de corriger les erreurs de lecture éventuelles et donc de retrouver avec un niveau de sécurité élevé les informations d'identification qui ont été codées. En outre, les informations qui peuvent être codées par cette méthode peuvent aussi bien être des informations binaires que des caractères imprimables.

Le traitement des documents retournés par les destinataires peut consister à lire les informations qu'ils ont fournies.
Ces informations peuvent se présenter sous la forme d'un questionnaire qu'ils ont reçu et rempli, ce questionnaire comportant des cases à cocher qui peuvent être lues facilement de manière automatique sans risque d'erreur.
Ces informations peuvent également se présenter sous la forme d'un coupon-réponse que le destinataire a par exemple choisi parmi plusieurs coupons-réponses figurant dans le document envoyé. Dans ce cas, une matrice d'identification est associée à chaque coupon-réponse, cette matrice comportant des informations d'identification du destinataire et des informations d'identification du coupon.

Un mode de réalisation du dispositif selon l'invention sera décrit ci-après, à titre d'exemple non limitatif, avec référence aux dessins annexés dans lesquels :
La figure 1 représente schématiquement une installation permettant la mise en oeuvre du procédé selon l'invention ;
La figure 2 représente sous la forme d'un schéma-bloc, une application du procédé selon l'invention.

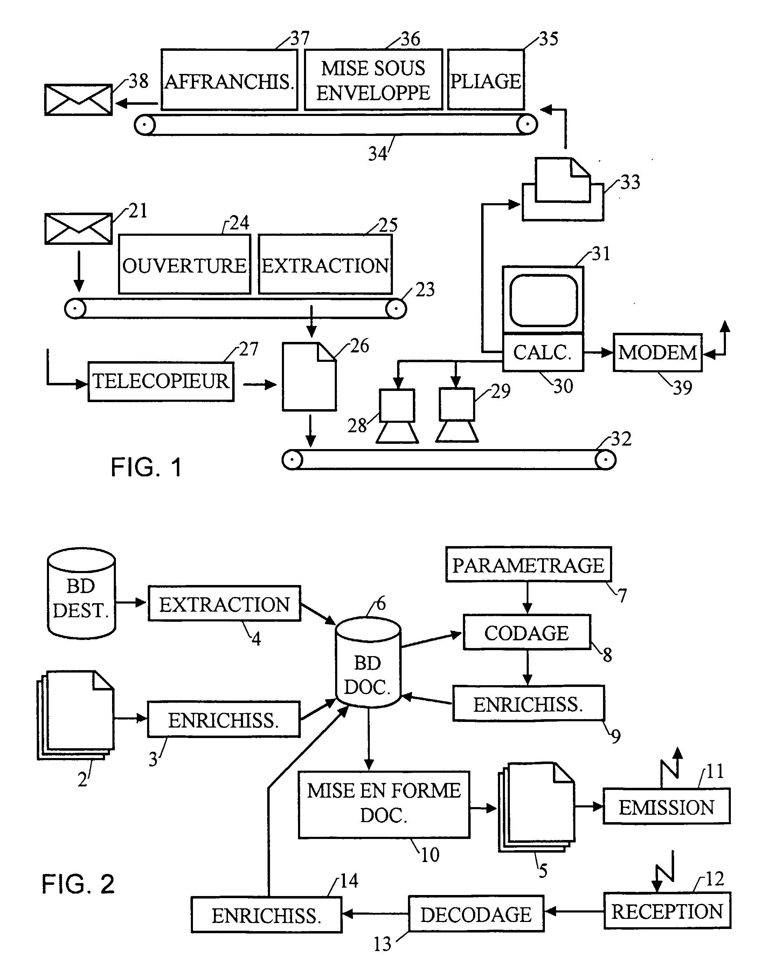

Sur la figure 1, l'installation permettant de mettre en oeuvre le procédé selon l'invention comprend un calculateur 30 comportant une mémoire de masse dans laquelle sont stockés des documents à envoyer vers un ensemble de personnes destinataires, ainsi que des informations concernant ces personnes rassemblées dans une base de données, ces informations comportant notamment des données d'identification et d'adressage de ces personnes.

Le calculateur est connecté à un écran de visualisation 31, une imprimante 33, un modem 39 pour émettre des documents sous la forme de fichiers ou de télécopies, et des moyens de saisie optique 28, 29, tels qu'un scanner ou une caméra vidéo. L'un de ces moyens de saisie peut être spécifiquement conçu pour localiser et mémoriser les codes matriciels pouvant figurer sur ces documents. A cet effet, il pourra être muni d'une optique grossissante.
Alternativement, on peut utiliser un seul dispositif de saisie optique qui produit simplement une image par page de document.

Par ailleurs, l'imprimante 31 est couplée à un convoyeur 34, par exemple de type à bande, permettant de transporter les documents qu'elle a imprimés vers un poste de pliage 35 de documents, puis vers un poste 36 de mise sous enveloppe des documents pliés, et enfin vers un poste d'affranchissement 37 des enveloppes. Les enveloppes 38 ainsi remplies et affranchies étant alors prêtes pour être envoyées par la poste.

Les moyens de saisie optique 28, 29 sont alimentés par un second convoyeur 32 sur lequel sont disposés les documents imprimés 26 à lire, et peuvent être conçus pour lire le recto et le verso des documents. On peut prévoir alternativement que les documents passent deux fois en regard des moyens de saisie optique, et traversent un poste de retournement entre ces deux passages.

Les documents imprimés 26 sont amenés sur le convoyeur 32, par exemple par un troisième convoyeur 23 qui reçoit les documents sous enveloppe 21 envoyés par les destinataires, et les amène successivement à un poste d'ouverture 24 des enveloppes, et à un poste d'extraction 25 où ils sont extraits des enveloppes et dépliés avant d'être placés sur le convoyeur 32.

Les documents imprimés 26 peuvent aussi provenir d'un télécopieur 27. Dans ce cas, ils sont directement placés sur le convoyeur 32.

La figure 2 représente le procédé mis en oeuvre par l'installation représentée sur la figure 1, et en particulier, les différentes opérations exécutées par le calculateur 30. Ce procédé comprend tout d'abord une étape d'extraction 4 par le calculateur 30 des données nécessaires à l'émission de documents, par exemple un questionnaire, vers les destinataires identifiés dans la base de données 1, les données extraites étant rangées dans une base de données 6 spécifique des documents à envoyer, ces données comportant au moins des données d'identification et d'adressage du destinataire. La base de données 6 peut être par ailleurs enrichie à l'étape 3 en associant à chaque destinataire, des informations d'identification de chaque document à lui envoyer, et éventuellement, chaque coupon-réponse figurant dans chacun de ces documents, ces informations d'identification étant constituées, par exemple, par un code de référence de ces documents ou des coupons-réponses.

Les informations d'identification du destinataire peuvent comprendre :
- son nom et son prénom,
- son adresse postale, et
- ses coordonnées téléphoniques,
ainsi que d'autres informations relatives à la personne du destinataire.

Par ailleurs, les techniques actuelles de compression d'images numérisées permettent d'ajouter à ces informations d'identification, l'image numérisée et compressée d'une photographie d'identité ou d'une empreinte digitale.

Le procédé selon l'invention comprend en outre une étape de codage 8 des informations d'identification de chaque destinataire en association avec les données d'identification des documents qui leur sont destinés, cette étape étant précédée par une étape de paramétrage 7 du codage.
On utilise une méthode de codage d'informations, qui consiste à représenter chaque unité d'information, par exemple chaque octet, d'une séquence d'informations, sous la forme de points répartis dans une matrice de plusieurs lignes et plusieurs colonnes, les caractéristiques respectives de ces points, par exemple, leur présence ou absence, ou encore leur couleur, permettant de reconstituer la séquence d'informations d'origine, sous une forme compréhensible. Les codages de ce type autorisent des redondances et peuvent intégrer des sommes de contrôle, ce qui permet d'obtenir une grande sécurité dans la transmission d'informations sous cette forme.

L'étape de paramétrage 7 consiste à introduire dans le calculateur 30 tous les paramètres définissant le type de codage utilisé. Ces paramètres comprennent par exemple, des taux de sécurité et de redondance, la taille d'un point de la matrice, les proportions de la matrice (rapport largeur / longueur). Ces paramètres peuvent aussi comprendre la taille de la matrice (nombre de lignes et nombre de colonnes), si l'on souhaite que la surface occupée par la matrice soit indépendante du nombre d'unités d'information (octets) dans la séquence à coder.
On peut également prévoir de sélectionner le principe de codage à utiliser, c'est-à-dire, le type d'algorithme fournissant la position des points dans la matrice en fonction de la valeur et de la position de chaque octet dans la séquence à coder.

Avantageusement, les données codées sont celles que l'on aura besoin de lire pour traiter les réponses des destinataires. Ainsi, ces données comprennent les données d'identification du destinataire, par exemple son nom et son adresse, et le code de référence du document, ou du coupon-réponse lorsque le document en comporte plusieurs.

Les codes matriciels générés à l'étape de codage 8 sont introduits à l'étape 9 dans la base de données 6 en association avec les destinataires correspondants.

Vient ensuite une étape de mise en forme 10 de documents qui consiste à créer au moins un document personnalisé 5 pour chaque destinataire, à partir des données stockées dans la base de données 6, ce document comprenant les informations d'identification et d'adressage du destinataire, ainsi que le ou les codes matriciels correspondants au destinataire et au document, obtenus à l'étape de codage 8. Ces documents personnalisés sont ensuite transmis vers leurs destinataires respectifs à l'étape 11.
Tous les moyens de transmission connus sont utilisables. Ainsi, comme précédemment mentionné, les documents 5 peuvent être envoyés à leurs destinataires par la poste, par télécopie, ou encore par un système de messagerie électronique. On peut également prévoir de sélectionner l'un de ces moyens de transmission en fonction des adresses disponibles du destinataire (adresse postale, numéro de télécopie, adresse de courrier électronique, ... ), mémorisées dans la base de données 6.

Dans le cas où ces documents doivent être envoyés par la poste, ils sont tout d'abord imprimés grâce à l'imprimante 33, puis pliés et introduits dans des enveloppes, de manière automatique comme représenté sur la figure 1. Le calculateur 30 peut également transmettre directement ces documents en utilisant le modem 39.

Les documents retournés par les destinataires sont également traités de manière automatique comme représenté sur la figure 1. A l'étape 12, ils sont reçus par les différents moyens de transmission disponibles (poste, télécopieur 27, modem 39).

Comme précédemment mentionné, les documents imprimés qui sont reçus sont saisis optiquement, les codes matriciels figurant sur ces documents étant lus de manière séparée ou non. Par ailleurs, les documents transmis par messagerie électronique arrivent sous la forme de fichiers informatiques incorporant les codes matriciels mémorisés dans des fichiers graphiques.

Les images transmises par les moyens de saisie optique 28, 29 sont introduites dans le calculateur 30 pour être traitées et décodées à l'étape 13.
Ce traitement consiste, le cas échéant, à localiser les emplacements où se trouvent les codes matriciels qui ont été introduits lors de l'étape de mise en forme 10 des documents 5, et à décoder ces matrices pour reconstruire les informations à l'origine du codage.

Il est à noter que, dans le cas des documents transmis par messagerie électronique, seul un décodage des codes matriciels est nécessaire, puisque ceux-ci sont déjà localisés dans des fichiers graphiques renvoyés par le destinataire.

Ce traitement peut avantageusement être complété par l'identification de cases cochées par le destinataire, si la partie du document retournée comporte un questionnaire en association avec des cases à cocher.

A l'étape 14 suivante, toutes les informations qui sont ainsi reçues et décodées viennent enrichir la base de données 6.

Bien entendu, les documents qui n'ont pas pu être émis à l'étape 11 où qui ne sont pas parvenus à leurs destinataires sont traités d'une manière analogue après avoir été triés des autres documents reçus, de manière à compléter et mettre à jour les informations contenues dans la base de données 6. Ceci se produit par exemple lorsque l'adresse du destinataire utilisée n'est pas correcte.
A cet effet, lorsque le document est émis par courrier postal, on peut prévoir d'utiliser des enveloppes à fenêtre, et d'imprimer le nom et l'adresse du destinataire, ainsi que le code matriciel d'identification sur le document à une position telle que ces informations soient visibles par la fenêtre lorsque le document est mis sous enveloppe. De cette manière, le courrier non distribué qui est retourné par la poste peut être traité sans ouvrir l'enveloppe.

Le calculateur met alors à jour la base de données 6, en indiquant pour tous les destinataires qui n'ont pas reçu un certain document portant une certaine référence, que celui-ci n'a pas été reçu, et que l'adresse utilisée n'est pas correcte. Le calculateur 30 peut alors utiliser un autre moyen de communication, si l'adresse ou le numéro correspondant est disponible dans la base de données 6, pour effectuer une autre tentative de transmission du document vers le destinataire en question.

Ainsi, à l'issue de l'étape 14, la base de données 6 comporte un enregistrement par destinataire comprenant :
- les données d'identification et d'adressage du destinataire,
- les codes de référence des documents envoyés à ce destinataire,
- les codes matriciels correspondants générés à l'étape 8, et
- les informations retournées dans les réponses éventuelles, et
- l'indication des erreurs d'adressage éventuelles.

Les informations concernant chaque destinataire enregistrées dans la base de donnée 6 sont ainsi enrichies et mises à jour automatiquement à l'aide des réponses reçues.

## Revendications

1. Procédé pour le traitement automatique de documents émis par un calculateur (30) vers une pluralité de destinataires, chacun de ces documents comportant au moins une partie que chaque destinataire peut émettre en direction d'un système de traitement, le calculateur étant couplé à des moyens de transmission (39, 33-35-36-37) et à une base de données (1) regroupant des données d'identification et d'adressage des destinataires,
caractérisé en ce qu'il comprend les étapes suivantes :
- pour chaque destinataire, la constitution (3, 4) par le calculateur (30), à l'aide des informations contenues dans la base de données (1), d'une séquence d'informations d'identification comprenant des données d'identification et d'adressage du destinataire, cette séquence d'informations étant compréhensible en elle-même, sans faire appel à une base de données,
- le codage (8) par le calculateur (30) de chaque séquence d'informations respectivement sous la forme d'une matrice de points dont les caractéristiques représentent les informations de la séquence d'informations d'identification,
- la mise en forme et la personnalisation (10) par le calculateur (30) de chaque document à chaque destinataire, comprenant l'insertion de la matrice contenant la séquence d'informations d'identification du destinataire dans la partie du document que le destinataire peut émettre,
- l'émission (11) par le calculateur des documents personnalisés (5) vers les destinataires correspondants,
- la réception (12) par un système de traitement des parties de document émises par les destinataires,
- la lecture et le décodage (13) par le système de traitement de chaque matrice figurant sur les parties de document reçues afin de restituer sous sa forme d'origine la séquence d'informations correspondante, et le traitement de chaque partie de document reçue en association avec les données d'identification contenues dans la séquence d'informations figurant sous forme de matrice sur la partie de document.

2. Procédé selon la revendication 1,
caractérisé en ce que les séquences d'informations d'identification à coder contiennent les informations d'identification dupliquées et associées à au moins une somme de contrôle.

3. Procédé selon la revendication 1 ou 2,
caractérisé en ce que le traitement des parties de document reçues comprend la lecture et le stockage des informations figurant dans ces parties de document en association avec les données d'identification lues et décodées.

4. Procédé selon l'une des revendications précédentes,
caractérisé en ce que les parties de document émises par les destinataires comprennent des cases à cocher, le procédé comprenant en outre l'identification des cases cochées et non cochées par le destinataire.

5. Procédé selon l'une des revendications précédentes,
caractérisé en ce que la séquence d'informations codée sous la forme d'une matrice de points et apposée sur un document contient des informations d'identification du document.

6. Procédé selon l'une des revendications précédentes,
caractérisé en ce que le document envoyé à chaque destinataire comprend plusieurs parties, le procédé comprenant l'insertion dans chaque partie de document d'une matrice d'identification obtenue par codage d'une séquence d'informations d'identification du destinataire, du document et de la partie de document.

7. Procédé selon l'une des revendications précédentes,
caractérisé en ce que les documents sont transmis par courrier postal du calculateur (30) vers les destinataires.

8. Procédé selon l'une des revendications 1 à 5,
caractérisé en ce que les documents sont transmis par télécopie du calculateur (30) vers les destinataires.

9. Procédé selon l'une des revendications 1 à 5,
caractérisé en ce que les documents sont transmis par messagerie électronique du calculateur (30) vers les destinataires.

10. Procédé selon l'une des revendications précédentes,
caractérisé en ce qu'il comprend en outre une étape de paramétrage (7) du codage matriciel, comportant l'introduction du type de codage matriciel à utiliser, d'un taux de sécurité et de redondance, de la taille des points de la matrice, des proportions de la matrice, et éventuellement, de la taille de la matrice.

11. Procédé selon l'une des revendications précédentes,
caractérisé en ce que le système de traitement est le calculateur (30), le procédé comprenant en outre la mise à jour (14) de la base de données avec les informations fournies dans les parties de document émises par les destinataires, en indiquant le cas échéant, les destinataires qui n'ont pas reçu le document qui leur a été transmis parce que l'adresse utilisée est erronée.

12. Procédé selon la revendication 10,
caractérisé en ce qu'il comprend en outre, la réémission des documents personnalisés (5) vers les destinataires dont l'adresse qui a été utilisée pour la première émission est incorrecte, en utilisant un autre moyen de transmission, lorsque l'adresse correspondant à ce moyen est disponible.

## Patentansprüche

1. Verfahren für die automatische Bearbeitung von Dokumenten, die von einem Rechner (30) an eine Vielzahl von Empfängern verschickt werden, wobei jedes dieser Dokumente mindestens einen Teil enthält, den jeder Empfänger an ein Verarbeitungssystem schicken kam, wobei der Rechner an Übertragungsmittel (39, 33 - 35 - 36 - 37) und an eine Datenbasis (1) gekoppelt ist, die die Daten für die Identifizierung und Adressierung der Empfänger zusammenfaßt,
dadurch gekennzeichnet, daß es folgende Phasen umfaßt:
- Für jeden Empfänger stellt (3, 4) der Rechner (30) mit Hilfe der Informationen, die in der Datenbasis (1) enthalten sind, eine Sequenz von Informationen für die Identifizierung und Adressierung des Empfängers zusammen, wobei diese Informationssequenz an sich verständlich ist, unabhängig von den Informationen, die nicht einer Datenbasis branchen.
- Der Rechner (30) codiert (9) jede Informationssequenz jeweils in Form einer Punktmatrix, deren Merkmale die Informationen der Sequenz mit den Identifikationsinformationen repräsentiert.
- Der Rechner (30) formatiert und individualisiert (10) jedes Dokument für jeden Empfänger, durch Einfügen der Matrix, die die Informationssequenz zur Identiftzierung des Empfängers enthält, in den Teil des Dokuments, den der Empfängers abschicken kann.
- Der Rechner (30) schickt die individualisierten Dokumente (5) an die entsprechenden Empfänger ab.
- Ein Verarbeitungssystem empfängt (12) die von den Empfängern abgeschickten Dokumententeile.
- Das Verarbeitungssystern liest und decodiert (13) jede Matrix, die in den empfangenen Dokumententeilen enthalten ist, um die entsprechende Informationssequenz in ihrer Originalform zu rekonstruieren und um jeden empfangenen Dokumententeil in Verbindung mit den Identifikationsdaten zu verarbeiten, die in der Informationssequenz enthalten sind, die in Form einer Matrix im Dokumententeil enthalten ist.

2. Verfahren gemäß Patentanspruch 1,
dadurch gekennzeichnet, daß die zu codierenden Informationssequenzen zur Identifizierung Identifikationsinformationen enthalten, die codiert und mindestens einer Summenkontrolle zugeordnet sind.

3. Verfahren gemäß Patentanspruch 1 oder 2,
dadurch gekennzeichnet, daß die Verarbeitung der empfangenen Dokumententeile das Lesen und Speichern der Informationen beinhaltet, die in diesen Dokumententeilen enthalten sind, in Verbindung mit den gelesenen und decodierten Identifikationsdaten.

4. Verfahren gemäß irgendeinem der vorangegangenen Patentasprüche,
dadurch gekennzeichnet, daß die von den Empfängern abgeschickten Dokumententeile anzukreuzende Kästchen enthalten, wobei das Verfahren darüber hinaus die Identifizierung der vom Empfänger angekreuzten und nicht angekreuzten Kästchen beinhaltet.

5. Verfahren gemäß irgendeinem der vorangegangenen Patentansprüche,
dadurch gekennzeichnet, daß die codierte Informationssequenz in Form einer Punktmatrix auf einem Dokument Informationen für die Identifizierung des Dokuments enthält.

6. Verfahren gemäß irgendeinem der vorangegangenen Patentansprüche,
dadurch gekennzeichnet, daß das an jeden Empfänger abgeschickte Dokument mehrere Teile beinhaltet, wobei das Verfahren die Eingliederung einer Identifikationsmatrix anhand der Codierung einer Informationssequenz zur Identifizierung des Empfängers, des Dokuments und des Dokumententeils in jedes Dokumententeil beinhaltet.

7. Verfahren gemäß irgendeinem der vorangegangenen Patentansprüche,
dadurch gekennzeichnet, daß die Dokumente per Post vom Rechner (30) an die Empfänger übermittelt werden.

8. Verfahren gemäß einem der Patentansprüche 1 bis 5,
dadurch gekennzeichnet, daß die Dokumente per Telefax vom Rechner (30) an die Empfänger übermittelt werden.

9. Verfahren gemäß einem der Patentansprüche 1 bis 5,
dadurch gekennzeichnet, daß die Dokumente per eMail vom Rechner (30) an die Empfänger übermittelt werden.

10. Verfahren gemäß irgendeinem der vorangegangenen Patentansprüche,
dadurch gekennzeichnet, daß es darüber hinaus eine Phase für die Parametrierung (7) der Matrixcodierung beinhaltet, die das Eingeben des zu verwendenden Typs von Matrixcodierung, einer Sicherheits- und Redundanzstufe, der Größe der Matrixpunkte, der Größenverhältnisse der Matrix und gegebenenfalls der Matrixgröße umfaßt.

11. Verfahren gemäß irgendeinem der vorangegangenen Patentansprüche,
dadurch gekennzeichnet, daß das Verarbeitungssystem der Rechner (30) ist und das Verfahren darüber hinaus eine Aktualisierung (14) der Datenbasis anhand der Informationen beinhaltet, die von den Dokumententeilen geliefert werden, die von den Empfängern übermittelt werden, gegebenenfalls unter Angabe derjenigen Empfänger, die das an sie übermittelte Dokument auf Grund der Fehlerhaftigkeit der verwendeten Adresse nicht erhalten haben.

12. Verfahren gemäß Patentanspruch 10,
dadurch gekennzeichnet, daß es darüber hinaus die erneute Absendung der individualisierten Dokumente (5) an diejenigen Empfänger beinhaltet, bei denen die für die erste Sendung verwendete Adresse falsch war, unter Verwendung eines anderen Übertragungsmittels, wenn die Adresse, die diesem Übertragungsmittel entspricht, verfügbar ist.

## Claims

1. Method for automatically processing documents issued by a computer (30) to a plurality of recipients, each of these documents comprising at least one portion each recipient is able to send to a processing system, the computer being connected to transmission means (39, 33-35-36-37) and to a data base (1) containing the addressing and identification information of the recipients, characterised in that it includes the following stages :
- for each recipient, the setting up (3, 4) by the computer (30) on the basis of information contained in the data base (1) of an identification information sequence including the addressing and identification data of the recipient, this information sequence being understandable in itself without it being necessary to refer to a data base,
- the coding (8) by the computer (30) of each information sequence respectively in the form of a matrix of points whose characteristics represent the information of the identification information sequence,
- the formatting and personalisation (10) by the computer (30) of each document intended for each recipient and including the insertion of the matrix containing the identification information sequence of the recipient in the portion of the document the recipient is able to send,
- the sending (11) by the computer of the personalised documents (5) to the corresponding recipients,
- the receiving (12) by the processing system of the document portions sent by the recipients,
- the reading and decoding (13) by the processing system of each matrix featured on the received document portions so as to restore in its original form the corresponding information sequence, and the processing of each document portion received in association with the identification data contained in the information sequence featured in the form of a matrix on the document portion.

2. Method according to claim 1, characterised in that the identification information sequences to be coded contain duplicated identification information associated with at least one control sum.

3. Method according to claim 1 or 2, characterised in that the processing of the received document portions include the reading and storage of the information featured in these document portions in association with the read and decoded identification data.

4. Method according to one of the preceding claims, characterised in that the document portions sent by the recipients include boxes to be ticked, the method further including identification of the boxes ticked and those not ticked by the recipient.

5. Method according to one of the preceding claims, characterised in that the information sequence coded in the form of a matrix of points and affixed to a document contains the identification information of the document.

6. Method according to one of the preceding claims, characterised in that the document sent to each recipient includes several portions, the method including the insertion in each document portion an identification matrix obtained by coding of an identification information sequence of the recipient, the document and the document portion.

7. Method according to one of the preceding claims, characterised in that the documents are sent by mail from the computer (30) to the recipients.

8. Method according to one of claims 1 to 5, characterised in that the documents are sent by fax from the computer (30) to the recipients.

9. Method according to one of claims 1 to 5, characterised in that the documents are sent by the computer (30) by means of electronic messaging to the recipients.

10. Method according to one of the preceding claims, characterised in that it further includes a stage (7) for parametering the matrix coding and comprising the introduction of the type of matrix coding to be used, a redundancy and security rate, the size of the points of the matrix, the proportions of the matrix, and possibly the size of the matrix.

11. Method according to one of the preceding claims, characterised in that the processing system is the computer (30), the method further including the updating (14) of the data base with the information supplied in the document portions sent by the recipients by indicating, if applicable, those recipients who have not received the document sent to them because the address used is erroneous.

12. Method according to claim 10, characterised in that it further includes the re-transmission of the personalised documents (5) to the recipients whose address used for the first sending having been incorrect by using another means of transmission when the address corresponding to these means is available.
